# EUROPÄISCHE PATENTSCHRIFT

(11) **EP 1 515 872 B1**
(45) Veröffentlichungstag und Bekanntmachung des Hinweises auf die Patenterteilung: **09.11.2005**
(21) Anmeldenummer: 03740252.6
(22) Anmeldetag: 14.06.2003
(51) Int. Cl.: B60R 11/02

(54) **HALTEVORRICHTUNG FÜR EIN TELEFON**
HOLDING DEVICE FOR A TELEPHONE
DISPOSITIF DE RETENUE POUR TELEPHONE

(30) Priorität: 21.06.2002 DE 10227922
(43) Veröffentlichungstag der Anmeldung: 23.03.2005
(73) Patentinhaber: DaimlerChrysler AG, 70567 Stuttgart (DE)
(72) Erfinder: ANZINGER, Armin, 84347 Pfarrkirchen (DE); BENTEL, Thomas, 71106 Magstadt (DE); HASENÖHRL, Oliver, 71157 Hildrizhausen (DE); INKOFERER, Heinrich, 84137 Haarbach (DE); KUMPFMÜLLER, Helmut, 84169 Altfraunhofen (DE); PAULUS, Michael, 84051 Essenbach (DE); SALZBERGER, Albert, 94419 Reisbach (DE)
(74) Vertreter: Wagner, Jürgen
(86) Internationale Anmeldenummer: PCT/EP2003/006301
(87) Internationale Veröffentlichungsnummer: WO 2004/000608

(56) Entgegenhaltungen:
- DE-A- 10 032 657
- DE-A- 19 817 345
- DE-A- 19 959 307

## Beschreibung

Die Erfindung betrifft eine Haltevorrichtung für ein Telefon nach dem Oberbegriff des Anspruchs 1 siehe DE 100 32 657 A.

Aus der DE 197 55 621 A1 ist eine Aufnahmevorrichtung für ein Mobiltelefon bekannt. Dort wird das Mobiltelefon auf einem Schlitten verschiebbar gelagert. Dieser ist von einem Elektromotor angetrieben, der den Schlitten in einen Schacht hinein und aus dem Schacht heraus fährt. Nachteilig ist hier, dass das Telefon in dem Schlitten ergonomisch nachteilig angeordnet und somit schlecht bedienbar ist. Zudem ist die Erreichbarkeit des Handys im Notfall, z. B. bei Ausfall der Stromversorgung, nicht gegeben.

Die DE 198 17 345 A1 zeigt eine Fahrzeugkonsole mit einem manuell verschwenkbaren Telefonhalter. Das Telefon ist in Aufnahmeposition durch eine zweiteilige Abdeckung abgedeckt. Nachteilig ist hier, dass die Bedienung dieser Konsole wenig komfortabel ist, da die Abdeckung und das Handy zum Verschwenken separat betätigt werden müssen.

Aufgabe der vorliegenden Erfindung ist es, eine Haltevorrichtung für ein Telefon zu schaffen, die möglichst komfortabel bedienbar ist, das Telefon schützt und dabei eine hohe Betriebssicherheit aufweist. Vorzugsweise soll die Haltevorrichtung das Telefon eine hohe Wertanmutung aufweisen und ästhetisch ansprechend gestaltet sein.

Die Aufgabe wird erfindungsgemäß durch eine Haltevorrichtung nach den Merkmalen des Anspruchs 1 gelöst.

Die Haltevorrichtung weist eine Antriebsvorrichtung mit zwei separat ausgebildeten Antrieben auf. Der erste Antrieb treibt einen das Telefon halternden Haltearm an, und der zweite Antrieb treibt einen Deckel an, der ein das Telefon aufnehmendes Staufach verschließt. Das Telefon ist in der Verstauposition sicher in dem Staufach verstaut und gegen Diebstahl und/oder Verschmutzung geschützt. Der Deckel verschließt das Staufach sicher und kann an seiner Außenseite ästhetisch ansprechend gestaltet werden, z. B. einen Leder- und/oder Stoffbezug und/oder eine Holzoberfläche aufweisen. Durch die beiden Antriebe kann das Telefon automatisch angetrieben von der Verstauposition in die Gebrauchsposition und zurück gefahren werden, so dass sich eine komfortable Bedienung ergibt. Zudem weist die Antriebsvorrichtung durch die beiden separat ausgebildeten Antriebe Redundanz und damit Betriebssicherheit auf.

Es ist vorgesehen, dass die Antriebsvorrichtung eine Steuerungsvorrichtung aufweist, die zum Steuern des ersten und des zweiten Antriebes ausgebildet ist. Über die Steuerungsvorrichtung kann der Bewegungsablauf beim Verbringen des Telefons von der Verstauposition in die Gebrauchsposition und zurück gesteuert werden. Zudem kann über die Steuerungsvorrichtung die Bedienbarkeit der Haltevorrichtung vereinfacht werden, z. B. kann eine Einknopfbedienung vorgesehen sein. Das bedeutet, dass in der Verstau- und in der Gebrauchsposition jeweils ein Knopf- bzw. Tastendruck genügt, um die Antriebsvorrichtung zum Verfahren des Telefons anzusteuern.

In einer Ausführung ist vorgesehen, dass die separaten Antriebe jeweils unterschiedliche Antriebsprinzipien aufweisen. Damit wird die Ausfallsicherheit des Systems erhöht. So kann der erste Antrieb als elektrischer Antrieb und der zweite Antrieb als mechanischer Antrieb mit Energiespeicher ausgebildet sein. In einer Bewegungsrichtung, z. B. beim Verfahren von der Verstau- in die Gebrauchsposition oder zurück, kann der elektrische Antrieb den Energiespeicher aufladen.

Über den mechanische Energiespeicher ist ein Verfahren des Telefons und/oder des Deckels selbst bei Stromausfall möglich. Da das Telefon eine eigene Stromversorgung aufweist, kann gerade in Notfällen eine Erreichbarkeit eine Erreichbarkeit des Telefons erforderlich sein. Ein Antrieb kann selbsthemmungsfrei ausgebildet sein, so dass auch bei Stromausfall ein Bewegen des Telefons oder des Deckels durch den zweiten Antrieb oder manuell möglich ist.

In einer Ausführung ist vorgesehen, dass die Antriebsvorrichtung eine Verriegelungsvorrichtung zum Verriegeln des Deckels aufweist. Somit kann in Verstauposition das Telefon sicher und gegen Diebstahl geschützt verwahrt werden.

In einer Ausführung ist vorgesehen, dass der Haltearm mechanische Aufnahmen und elektrische Verbindungen für das Telefon aufweist. So ist ein einfacher elektrischer Anschluss des Telefons z. B. an eine Freisprecheinrichtung möglich. Auch eine stabile mechanische Halterung an dem Haltearm kann durch die Halterungen erzielt werden.

Das Telefon kann als festinstalliertes Telefon oder als Mobiltelefon, z. B. GSM-Telefon oder tragbares Telefon ausgebildet sein. Es ist auch möglich anstatt des Telefons oder zusätzlich noch ein Display oder ein Handheld PC oder eine Tastatur an dem Haltearm anzubringen.

Die Haltevorrichtung kann vorteilhaft in Fahrzeugen, vorzugsweise in Personenkraftwagen verwendet werden. Dabei ist ein Einbau der Haltevorrichtung im Cockpitbereich oder in der Mittelkonsole vorgesehen.

In den Figuren sind weitere Ausführungen der Erfindung dargestellt und erläutert, dabei zeigen:
- Fig. 1: Eine Haltevorrichtung mit einem Telefon in Verstauposition und einem geschlossenen Deckel,
- Fig. 2: Die Haltevorrichtung mit geöffnetem Deckel,
- Fig. 3: Die Haltevorrichtung mit Telefon in Gebrauchsposition und geöffnetem Deckel.

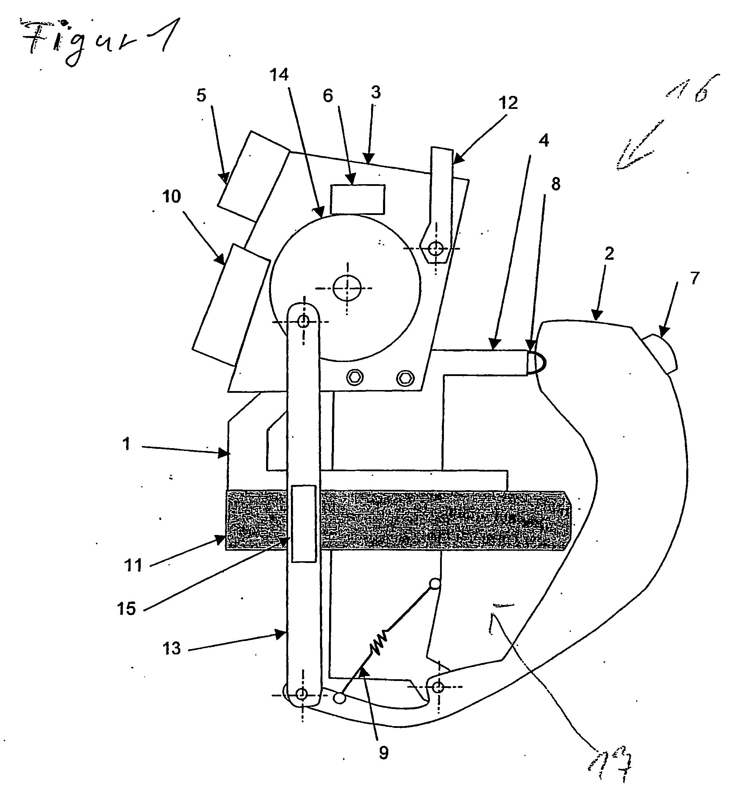

In **Figur 1** ist eine Haltevorrichtung 16 dargestellt. Sie umfasst einen Haltearm 1, an dem ein Telefon 11 gehaltert ist, einen Deckel 2, eine Antriebsvorrichtung 3 mit Federmotor, Feder 9 und Elektromotor 10, einen Befestigungsrahmen 4 und einer Steuerungsvorrichtung 5. Die Steuerungsvorrichtung 5 weist Sensoren 6 auf. Der Haltearm 1 ist mit dem Telefon in Verstauposition dargestellt. das Telefon 11 ist in einem Staufach 17 aufgenommen, welches durch den Deckel 2 verschlossen ist. Der Deckel 2 ist über eine Verriegelungsvorrichtung 8 mit Drehfallenschloss in dieser Verschlusslage gehalten. Ein mechanischer Antrieb mit Feder 9 und Dämpfer ist mit dem Deckel 2 verbunden und beaufschlagt den Deckel 2 in Öffnungsrichtung. Der Dämpfer ist als Viskobremse ausgebildet und dämpft die Öffnungsbewegung des Deckels 2. Zum Öffnen des Deckels 2, d. h. letztlich zum Verfahren des Telefons in Gebrauchsstellung, wird ein an der Außenseite des Deckels 2 angeordneter Schalter 7 betätigt. Der Schalter 7 ist mit der Verriegelungsvorrichtung 8 und der Steuerungsvorrichtung 5 verbunden. Er entriegelt die Verriegelungsvorrichtung 8 worauf der Deckel durch die Feder 9 und seine Gewichtsverteilung in Öffnungsrichtung beaufschlagt wird. Beim Öffnungsvorgang ist der mechanische Antrieb von dem elektrischen Antrieb entkoppelt. So ist auch bei Ausfall des Elektrometers 10 ein Öffnen des Staufaches 17 gewährleistet und der Zugriff zu dem Telefon 11 gesichert.

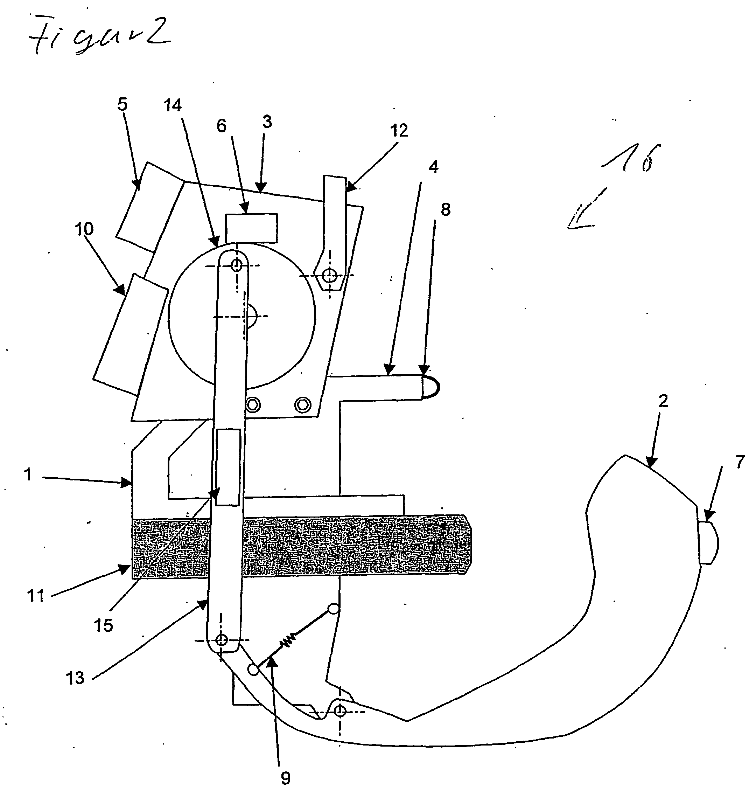

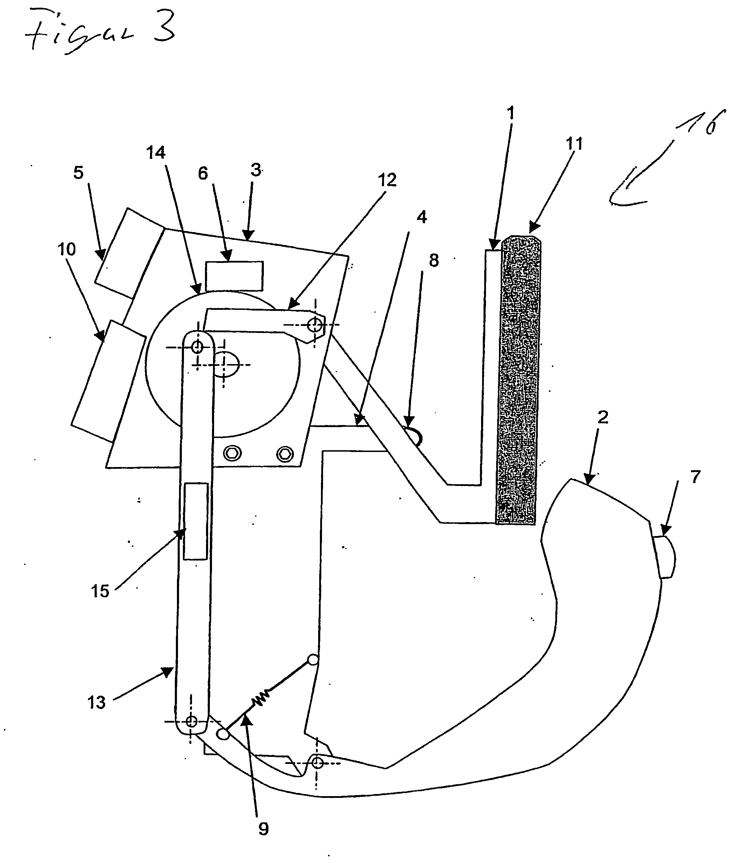

Über die Sensorik 6 erkennt die Steuervorrichtung 5 die in **Figur 2** dargestellte geöffnete Stellung des Deckels 2 und steuert den Elektromotor 10 zum Ausfahren des Haltearmes 1 an. Nach Erreichen der Gebrauchsposition, die in Figur 3 dargestellt ist, schaltet die Steuervorrichtung 5 den Elektromotor 10 ab.

Über einen Hebel 12 und eine Pleuelstange 13 ist der elektrische Antrieb 10 mit dem Deckel 2 und somit mit dem mechanischen Antrieb 9 verbunden. Am Ende der Ausfahrbewegung wirkt der Elektromotor 10 über eine Excenterscheibe 14 und den mit ihr verbundenen Hebel 12 auf den Deckel 2 ein, so dass der Deckel 2 etwas schließt. Damit wird der Spalt zwischen dem Deckel 2 und dem ausgefahrenen Telefon 11 in Gebrauchsstellung reduziert. Dadurch wird die Erreichbarkeit des Tasters 7 und/oder die Ästhetik der Haltevorrichtung verbessert.

In der Gebrauchsposition kann das Telefon 11 aus dem Haltearm 1 entnommen werden. Ebenso kann während der Fahrt eines Personenkraftwagens das Telefon 11 über eine Freisprecheinrichtung benutzt werden.

Die Steuerungsvorrichtung 5 überwacht mittels der Sensoren 6 die Ausfahrbewegung des Telefons 11 z. B. durch Überwachung des Aufnahmestromes des Elektromotors 10. Wird die Ausfahrbewegung behindert, z. B. durch Einklemmen, reversiert die Steuervorrichtung 5 den Antrieb 10 um wenige Millimeter und schaltet dann ab. Nach Beendigung des Hindernisses kann durch erneute Betätigung des Tasters 7 der Ausfahrvorgang fortgesetzt werden.

Der Schließvorgang wird durch Betätigen des Tasters 7 eingeleitet. Die Steuervorrichtung ist so ausgebildet, dass über den Hebel 12 und die Pleuelstange 13 dabei der Deckel 2 zunächst von dem Elektromotor 10 maximal geöffnet wird. Zeitgleich treibt der Elektromotor 10 den Haltearm 1 in Richtung Verstauposition. Der Deckel 2 verbleibt solange in geöffneter Stellung, bis der Haltearm 1 weitestgehend eingefahren ist. Danach wirkt der Elektromotor 10 auf den Deckel 2 in Schließrichtung ein und lädt dabei den Federspeicher 9 auf.

In Verstauposition wirkt der Elektromotor 10 über die Excenterscheibe 14 auf das Drehfallenschloss 8 ein und verriegelt dieses. Die Sensorik 6 erkennt den Endpunkt dieser Bewegung, meldet diesen an die Steuervorrichtung 5, die dann den Antrieb 10 abschaltet. Auch beim Schließvorgang wird von der Steuervorrichtung 5 durch Überwachung der Stromaufnahme des Antriebsmotors 10 ein eventuelles Einklemmen überwacht.

In geöffneter Stellung ist der Deckel 2 über ein Dämpfungselement 15 gegen Missbrauch geschützt, indem dieses Dämpfungselement 15 aufgrund Fehlbedienung auftretende Kräfte aufnimmt. Übersteigen diese Kräften eine gewisse Schwelle, ist vorgesehen, dass der Deckel 2 auf einen Anschlag aufläuft.

## Patentansprüche

1. Haltevorrichtung für ein Telefon,
mit einer Antriebsvorrichtung (3), die das Telefon (11) zwischen einer in einem Staufach angeordneten Verstauposition und einer Gebrauchsposition verfährt, wobei die Antriebsvorrichtung (3) zwei separate Antriebe aufweist, wobei der erste Antrieb (10) als elektrischer Antrieb ausgebildet ist, der einen das Telefon (11) halternden Haltearm (1) und der zweite Antrieb (9) als mechanischer Antrieb mit einem Energiespeicher ausgebildet ist, der einen das Staufach (17) verschließenden Deckel (2) antreibt,
**dadurch gekennzeichnet,**
**dass** der erste Antrieb (10) mit dem zweiten Antrieb (9) so gekoppelt ist, dass beim Verfahren des Telefons (11) von der Verstauposition in die Gebrauchsposition zuerst der zweite Antrieb (9) unter Entladung des Energiespeichers den Deckel (2) öffnet und nachdem der Deckel weitgehend geöffnet ist, der erste Antrieb (10) den Haltearm (1) zum Verbringen des Telefons (11) von der verstauposition in die Gebrauchsposition antreibt.

2. Haltevorrichtung nach Anspruch 1,
**dadurch gekennzeichnet,**
**dass** die Antriebsvorrichtung (3) eine Steuervorrichtung (5) aufweist, die zum Steuern des ersten Antriebs (10) und des zweiten Antriebes (9) ausgebildet ist.

3. Haltevorrichtung nach Anspruch 1 oder 2,
**dadurch gekennzeichnet,**
**dass** der erste Antrieb (10) einen Elektromotor und der zweite Antrieb (9) einen Federmotor aufweist.

4. Haltevorrichtung nach Anspruch 1 oder 3,
**dadurch gekennzeichnet,**
**dass** der erste Antrieb (10) mit dem zweiten Antrieb (9) so gekoppelt ist, dass beim Verfahren des Telefons (11) von der Gebrauchsposition in die Verstauposition der erste Antrieb (10) den Haltearm (1) zum Verbringen des Telefons (11) von der Gebrauchsposition in die Verstauposition antreibt und dass nachdem die Verstauposition erreicht ist der erste Antrieb den Deckel (2) schließt und dabei den Energiespeicher des zweiten Antriebs lädt.

5. Haltevorrichtung nach einem der Ansprüche 1 bis 4,
**dadurch gekennzeichnet,**
**dass** die Steuervorrichtung (6) einen elektrischen Bedientaster (7) aufweist, der bei manueller Betätigung ein signal zum Verfahren des Telefons (11) in Verstauposition und/oder in Gebrauchsposition generiert.

6. Haltevorrichtung nach einem der Ansprüche 1 bis 5,
**dadurch gekennzeichnet,**
**dass** die Antriebsvorrichtung (3) eine Verriegelungsvorrichtung (8) zum Verriegeln des Deckels (2) in Verstauposition aufweist.

7. Haltevorrichtung nach einem der Ansprüche 1 bis 6,
**dadurch gekennzeichnet,**
**dass** der erste Antrieb (10) selbsthemmungsfrei ausgebildet ist, so dass auch bei Ausfall des ersten Antriebs (10) der zweite Antrieb (9) den Deckel (2) öffnet.

8. Haltevorrichtung nach einem der Ansprüche 1 bis 7,
**dadurch gekennzeichnet,**
**dass** die Steuervorrichtung (6) einen oder mehrere Sensoren (5) aufweist, die zum Erkennen von Positionen des Haltearmes und/oder des Deckels und/oder von Überlast eines Antriebs (10, 9) ausgebildet ist bzw. sind.

9. Haltevorrichtung nach einem der Ansprüche 1 bis 8,
**dadurch gekennzeichnet,**
**dass** der Haltearm (1) eine elektrische Steckverbindung aufweist, die zum elektrischen Anschluss des Telefons (11) ausgebildet ist.

## Claims

1. A holding device for a telephone,
having a drive device (3) which moves the telephone (11) between a stowed position in a storage compartment and an operating position, the drive device (3) having two separate drive units, the first drive unit (10) taking the form of an electric drive unit which drives a holding arm (1) which holds the telephone (11) and the second drive unit (9) taking the form of a mechanical drive unit with an energy accumulator which drives a cover (2) which closes the storage compartment (17),
**characterised in that**
the first drive unit (10) is coupled to the second drive unit (9) in such a manner that as the telephone (11) is moved from the stowed position (9) into the operating position the second drive unit (9) opens the cover (2), whilst at the same time discharging the energy accumulator, and once the cover has been largely opened the first drive unit (10) actuates the holding arm (1) to bring the telephone (11) out of the stowed position into the operating position.

2. A holding device in accordance with claim 1,
**characterised in that**
the drive device (3) has a control device (5) which is designed to control the first drive unit (10) and the second drive unit (9).

3. A holding device in accordance with claim 1 or 2,
**characterised in that**
the first drive unit (10) has an electric motor and the second drive unit (9) has a spring motor.

4. A holding device in accordance with claim 1 or 3,
**characterised in that**
the first drive unit (10) is coupled with the second drive unit (9) in such a manner that as the telephone (11) moves from the operating position into the stowed position the first drive unit (10) actuates the holding arm (1) to bring the telephone (11) from the operating position into the stowed position, and once the stowed position has been reached, the first drive unit closes the cover and at the same time charges the energy accumulator of the second drive unit.

5. A holding device in accordance with one of claims 1 to 4,
**characterised in that**
the control device (6) has an electrical operating button (7) which when actuated manually generates a signal to move the telephone (11) into the stowed position and/or the operating position.

6. A holding device in accordance with one of claims 1 to 5,
**characterised in that**
the drive device (3) has a locking device (8) for locking the cover (2) in the stowed position.

7. A holding device in accordance with one of claims 1 to 6,
**characterised in that**
the first drive unit (10) is designed without a self-locking function so that when the first drive until (10) fails the second drive unit (9) opens the cover (2).

8. A holding device in accordance with one of claims 1 to 7,
**characterised in that**
the control device (6) has one or more sensors (5) which is/are designed to identify the positions of the holding arm and/or the cover and/or an overload of a drive unit (10, 9).

9. A holding device in accordance with one of claims 1 to 8,
**characterised in that**
the holding arm (1) has an electrical plug connection which is designed to make an electrical connection to the telephone (11).

## Revendications

1. Dispositif de support pour téléphone, comprenant un système d'entraînement (3) pour déplacer le téléphone (11) entre une position de rangement prévue dans un compartiment de rangement et une position d'utilisation, le système d'entraînement (3) présentant deux entraînements distincts, le premier entraînement (10) étant réalisé sous la forme d'un entraînement électrique destiné à entraîner un bras de support (1) soutenant le téléphone (11) et le second entraînement (9) étant réalisé sous la forme d'un entraînement mécanique doté d'un accumulateur d'énergie pour entraîner un couvercle (2) refermant le compartiment de rangement (17), **caractérisé en ce que** le premier entraînement (10) est couplé au second entraînement (9) de telle sorte que, lors du déplacement du téléphone (11) de la position de rangement dans la position d'utilisation, le second entraînement (9) ouvre d'abord le couvercle (2) en déchargeant l'accumulateur d'énergie et, une fois que le couvercle est grand ouvert, le premier entraînement (10) entraîne le bras de support (1) pour transférer le téléphone (11) de la position de rangement dans la position d'utilisation.

2. Dispositif de support selon la revendication 1, **caractérisé en ce que** le système d'entraînement (3) présente un système de commande (5) destiné à commander le premier entraînement (10) et le second entraînement (9).

3. Dispositif de support selon la revendication 1 ou 2, **caractérisé en ce que** le premier entraînement (10) présente un moteur électrique et le second entraînement (9) un moteur à ressort.

4. Dispositif de support selon la revendication 1 ou 3, **caractérisé en ce que** le premier entraînement (10) est couplé au second entraînement (9) de telle sorte que, lors du déplacement du téléphone (11) de la position d'utilisation dans la position de rangement, le premier entraînement (10) entraîne le bras de support (1) pour transférer le téléphone (11) de la position d'utilisation dans la position de rangement et, une fois qu'il a atteint la position de rangement, le premier entraînement ferme le couvercle (2) et charge alors l'accumulateur d'énergie du second entraînement.

5. Dispositif de support selon l'une quelconque des revendications 1 à 4, **caractérisé en ce que** le système de commande (6) présente un bouton-poussoir électrique (7) qui, dans le cas d'un actionnement manuel, génère un signal pour déplacer le téléphone (11) dans la position de rangement et/ou dans la position d'utilisation.

6. Dispositif de support selon l'une quelconque des revendications 1 à 5, **caractérisé en ce que** le système d'entraînement (3) présente un système de verrouillage (8) pour verrouiller le couvercle (2) dans la position de rangement.

7. Dispositif de support selon l'une quelconque des revendications 1 à 6, **caractérisé en ce que** le premier entraînement (10) est réalisé sans blocage automatique de telle sorte que, même dans le cas d'une défaillance du premier entraînement (10), le second entraînement (9) ouvre le couvercle (2).

8. Dispositif de support selon l'une quelconque des revendications 1 à 7, **caractérisé en ce que** le système de commande (6) présente un ou plusieurs capteur(s) (5) destiné(s) à identifier les positions du bras de support et/ou du couvercle et/ou un courant de surcharge d'un entraînement (10, 9).

9. Dispositif de support selon l'une quelconque des revendications 1 à 8, **caractérisé en ce que** le bras de support (1) présente un connecteur électrique destiné à raccorder électriquement le téléphone (11).
